# EUROPEAN PATENT SPECIFICATION

(11) **EP 0 701 043 B1**
(45) Date of publication and mention of the grant of the patent: **26.01.2005**
(21) Application number: 95305920.1
(22) Date of filing: 24.08.1995
(51) Int. Cl.: E21B 33/129, E21B 33/1295, E21B 23/02, E21B 7/06

(54) **Torque-resistant well packer**
Drehmomentwiderstehender Bohrlochpacker
Packer de puits résistant à la torsion

(30) Priority: 30.01.1995 US 380901; 26.08.1994 US 296941
(43) Date of publication of application: 13.03.1996
(73) Proprietor: HALLIBURTON ENERGY SERVICES, INC., Dallas, Texas 75381-9052 (US)
(72) Inventor: White, Pat M., Carrollton, Texas 75007 (US); Gano, John C., Carrollton, Texas 75007 (US)
(74) Representative: Wain, Christopher Paul

(56) References cited:
- GB-A- 2 079 821
- GB-A- 2 086 962
- GB-A- 2 255 366
- GB-A- 2 272 718
- US-A- 2 670 797
- US-A- 2 726 722
- US-A- 3 976 133
- US-A- 4 224 987
- US-A- 4 288 082
- US-A- 4 440 223
- US-A- 4 488 595
- US-A- 4 498 534
- US-A- 4 588 030
- US-A- 4 793 411
- US-A- 4 811 785
- US-A- 5 101 897
- US-A- 5 311 938
- US-A- 5 322 127

## Description

The present invention relates to a torque-resistant well packer.

In our copending European patent application no. filed on even date herewith and claiming priority from U.S. application serial no. 08/296941 only (17671), we have described a multilateral well formation method in which a hydraulically settable tubular packer structure is operatively installed in a vertical well casing and coaxially supports an orienting nipple. The nipple has a key-receiving vertical locating profile formed on its interior side surface, and additionally has a spiral groove formed on its interior side surface.

After the packer/nipple structure is set in place within the casing, a diverter structure having a drillable core portion is lowered through the casing and passed downwardly through the packer/nipple structure interior. A locating key assembly carried by a lower end portion of the diverter structure snaps into place within the nipple vertical locating profile in a manner stopping further downward travel of the diverter structure and locking it to the nipple and locating the top end of the diverter structure above the top end of the packer/nipple structure at a predetermined vertical position within the well casing. As the diverter structure passes downwardly through the packer/nipple structure, and before the diverter locating key assembly snaps into locked engagement within the nipple vertical locating profile, a spring-loaded orienting lug disposed on the diverter structure enters and spirally traverses the nipple interior surface groove to thereby rotate the diverter structure to a predetermined circumferential orientation within the casing.

Using a sloped upper end face of the installed diverter as a deflecting surface, a suitable boring structure is then used to drill outwardly through the casing, and into the surrounding earth, to establish a lateral extension of the well bore. The newly formed lateral extension of the well is then provided with a concrete-encased lining structure that communicates it with the interior of the casing above the diverter structure. The diverter structure used to facilitate the formation of the lateral well extension blocks off the casing portion above the packer/nipple structure from the casing portion below the packer/nipple structure. In order to re-establish communication between these casing portions it is necessary to drill out the core of the diverter structure.

As will be appreciated, once the packer/nipple structure is set into place within the casing, in a precise vertical location and rotational orientation therein, it is critical to maintain both the vertical position and rotational orientation of the packer/nipple structure during the balance of the following lateral well extension formation procedure including the positioning of the diverter structure in the packer/nipple structure and its subsequent use as a boring tool deflection guide device.

Conventional packers which are mechanically or hydraulically set in place within a well flow conductor such as a casing string are respectively anchored and sealed within the conductor using circumferentially spaced, radially outwardly deflectable toothed metal slip anchors that are driven into biting engagement with the interior side surface of the casing, and an annular resilient seal structure that is axially compressed in a manner radially deforming it outwardly into sealing engagement with the interior side surface of the casing. These conventionally constructed packers are typically subjected primarily to axial loads within the casing, and their anchor structures, when properly set, work well to prevent axial shifting of the packer within the casing.

However, in the packer application just described, the set packer is subjected during various phases of the lateral well portion formation procedure to relatively high rotational forces within the casing, and conventional packer slip anchor structures do not tend to provide sufficient resistance to packer rotation within the casing, after the packer has been set, to prevent packer rotation relative to the casing in this particular packer application. Additionally, a potential problem with conventional packers of the type generally described above is the potential overstressing of their annular resilient seal assemblies during setting of the packer within the casing.

US 5,101,897 describes a slip mechanism for anchoring a well tool in a well conduit. A similar slip mechanism is disclosed also in GB 2 086 962.

From the foregoing it can readily be seen that a need exists for improved packer apparatus that eliminates or at least substantially reduces the foregoing anchoring and sealing problems, limitations and disadvantages which are typically associated with conventionally constructed packer assemblies.

According to the invention there is provided a torque-resistant well packer as defined in claim 1, and a method of installing a well packer as defined in claim 9.

In one embodiment the tubular body structure includes telescoped first and second tubular portions axially movable toward one another and having facing annular surfaces forming with an annular outer side surface section of one of said first and second tubular portions an annular recess on said tubular body structure; an annular resilient seal structure coaxially received in said annular recess; setting means operable to force one of said first and second tubular portions toward the other of said first and second tubular portions, through a predetermined setting distance, to thereby exert an axial setting force on said annular resilient seal structure in a manner axially compressing and radially outwardly deforming it; and means for permitting one of said first and second tubular portions to be axially deformed, during axial compression of said resilient seal structure. In a manner limiting the axial setting force exertable on said resilient seal structure by said first and second tubular portions.

Further features are defined in the dependent claims.

In carrying out the present invention a packer structure is coaxially installable within a subterranean well flow conductor and is thereafter highly resistant to being rotated relative to the well flow conductor. The packer structure includes a tubular body coaxially positionable within the well flow conductor and having an axial centreline, and a circumferentially spaced plurality of slip anchors supported on the tubular body for radial movement relative thereto between inwardly retracted release positions and outwardly extended setting positions. Setting means are carried on the tubular body and are selectively operable to forcibly drive the slip anchors from their release positions to their extended positions in which toothed outer side surface portions of the slip anchors bitingly engage the interior side surface of the well flow conductor.

Preferably, a tubular orienting nipple is coaxially secured to a lower end portion of the tubular packer body portion and has an interior side surface portion in which a locating key profile and an axially spiraling groove are formed. Additionally, an annular resilient seal structure is coaxially carried on the tubular packer body portion and is axially compressed and radially outwardly deformed into sealing engagement with the interior side surface of the well flow conductor in response to the setting of the slip anchors.

According to one packer torque resisting feature of the invention, the gripping teeth on the outer sides of the slip anchors having lengths that are sloped relative to the axis of the packer body and relative to a plane perpendicular to the packer body axis. This specifically designed gripping tooth arrangement and orientation provides the installed packer with a high degree of resistance to both axial and circumferential displacement relative to the well flow conductor. Each of the slip anchor outer side surfaces has upper and lower sections, with the gripping teeth on the upper and lower sections being sloped in generally opposite directions. Preferably, each circumferentially adjacent pair of upper sections have gripping teeth that are sloped in generally opposite directions.

According to another packer torque resisting feature of the invention, the slip anchors have sloped inners side surfaces that are engaged by circumferentially spaced flat areas formed on facing end portions of an opposed annular setting wedge members coaxially carried on the tubular packer body. These flat areas are circumferentially interdigitated with arcuate outer side surface portions of the facing wedge member ends that project farther out in radial directions than the flat areas.

When one of the wedge members is axially driven toward the other wedge member, the flat areas on the wedge members forcibly drive the slip anchors outwardly from their release positions to their setting positions. A subsequent rotational force imposed on the packer body and wedge members, which would otherwise tend to rotate the packer relative to the well flow conductor, is strongly resisted as the curved portions wedge member surface portions between the flat surface portions begin to move into an underlying relationship with the inner side surfaces of the slip anchors. As this occurs, the radially outwardly directed setting force on the anchors is increased, thereby increasing the resistance of the packer to rotational displacement relative to the well flow conductor.

According to another feature of the present invention, the packer is hydraulically settable in a two step procedure utilizing a drillable block member anchored within an interior portion of the tubular packer body in a sealing relationship therewith. A passage extends into the block through the top end thereof and then turns outwardly through the block and extends through an interior portion of a side wall section of the tubular packer body.

In the first setting step, a pressurized fluid is forced through the passage and responsively causes the setting of the slip anchors and a partial axial compression of the resilient seal structure. In the second setting step, a pressurized fluid is forced downwardly through the packer body interior and exerts a downwardly directed pressure force on the top end of the block. This, in turn, shifts the packer body downwardly relative to the setting wedges and completes the axial compression of the resilient seal structure. Finally, the block is drilled out to permit well fluid flow through the entire interior length of the packer.

According to a further feature of the present invention, during the second setting step, an annular structure coaxially carried by the tubular packer body forcibly engages one end of the seal structure and is axially deformable, to thereby limit the maximum axial compression force exerted on the seal structure, in response to the exertion thereon of an axial force exceeding a predetermined maximum level. Preferably, this axial deformation is provided by an annular setting force limiting member coaxially received in one of the setting wedge member, engageable with an end of the seal structure, and being wedgingly drivable axially into the setting wedge member.

In order that the invention may be more fully understood, embodiments thereof will now be described, by way of example only, with reference to the accompanying drawings, wherein:
FIG. 1 is a highly schematic partly elevational cross-sectional view through a vertical portion of a subterranean well casing structure in which an embodiment of a hydraulically settable packer of the present invention is operatively disposed;
FIGS. 2A - 2E are enlarged scale partial quarter sectional views through vertical portions of the packer structure that respectively correspond to vertical packer structure portions "A" through "E" in FIG. 1, with the packer structure being in an initial run-in configuration thereof;
FIGS. 3A - 3C are enlarged scale partial quarter sectional views through vertical portions of the packer structure that respectively correspond to vertical packer structure portions "A" through "C" in FIG. 1, with the packer structure being in a partially set configuration thereof;
FIGS. 4A-4C are enlarged scale partial quarter sectional views through vertical portions of the packer structure that respectively correspond to vertical packer structure portions "A" through "C" in FIG. 1, with the packer structure being in a fully set configuration thereof;
FIG. 5 is an enlarged scale bottom end elevational view, taken generally along line 5-5 of FIG. 2A, of a circumferential portion of an annular setting wedge member used in the packer structure and having a circumferentially spaced series of uniquely operative milled flat areas formed thereon;
FIG. 6A is an enlarged scale cross-sectional detail view of the circled packer area "6A" in FIG. 2A, and illustrates a specially designed seal setting force-limiting structure in its run-in orientation;
FIG. 6B is an enlarged scale cross-sectional detail view of the circled packer area "6B" in FIG. 4A, and illustrates the seal setting force-limiting structure after the packer has been brought to its fully set orientation; and
FIG. 7 is an enlarged, partially developed exterior side elevational view of a portion of the packer taken along line 7-7 of FIG. 2A and illustrating the specially configured toothed outer sides of a pair of slip anchor members operatively carried by the packer body.

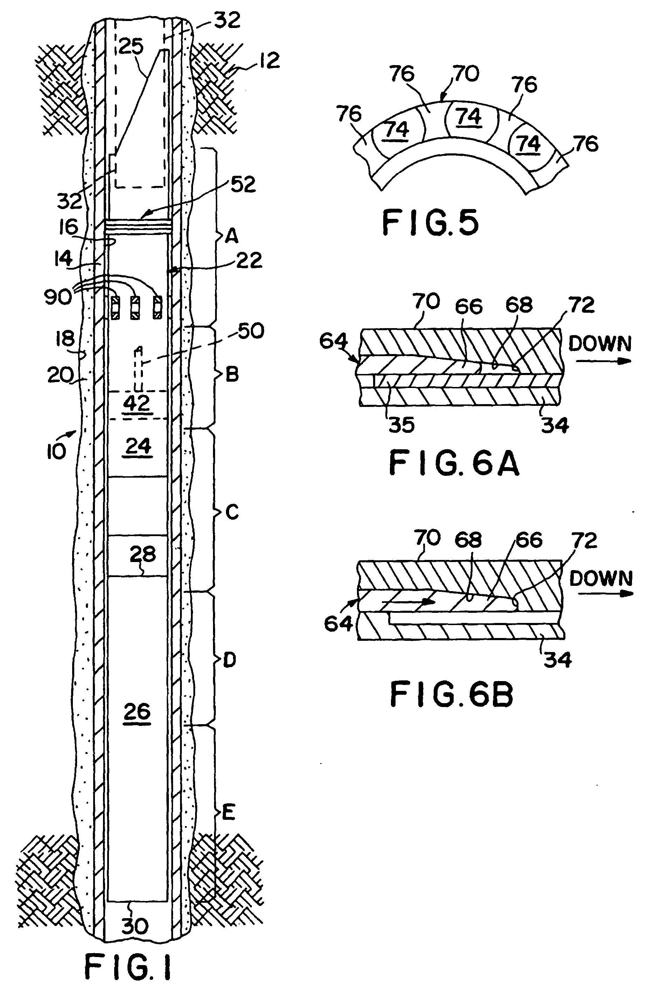

Schematically illustrated in FIG. 1 is a vertical portion of a subterranean well 10 extending into the surrounding earth 12 and including a well flow conductor in the form of a metal casing string 14 having an interior side surface 16 and being set into a well bore 18 with a suitable cement lining material 20 circumscribing the casing 14. Representatively, the well 10 is an existing well which is to be augmented by the subsequent formation of at least one lateral well bore that extends generally horizontally outwardly from the casing 14 and communicates with its interior. This subsequent addition of a lateral well portion to the existing well 10 is illustrated and described in our said copending European patent application referred to above.

Still referring to FIG. 1, to facilitate this lateral extension of the well 10 the present invention provides a specially designed hydraulically settable packer structure 22 that is set in place within the casing 14, in a predetermined vertical location and rotational orientation therein, in a manner subsequently described. Packer structure 22 is of a hollow, open-ended tubular configuration and includes a tubular packer body assembly 24 having a sloping upper end 25, and a lower end portion coaxially anchored within an upper end portion of a tubular orienting nipple 26 having an upper end 28 and a lower end 30.

Before the packer structure 22 is set within the casing 14 it is lowered into the casing, to a predetermined depth therein, on a lower end portion of a tubular structure 32 that is coaxially secured within an upper end portion of the packer body assembly 24. The tubular structure 32 may representatively be the anchor latch structure illustrated and described in our copending European patent application no. filed on even date herewith, based on U.S. application nos. 08/296941 and 08/380768 (17674) and, while being anchored to the upper end of the packer body assembly 24, permits a predetermined amount of relative axial movement between the tubular structure 32 and the packer body assembly 24 for purposes later described.

### Structure of the Packer 22

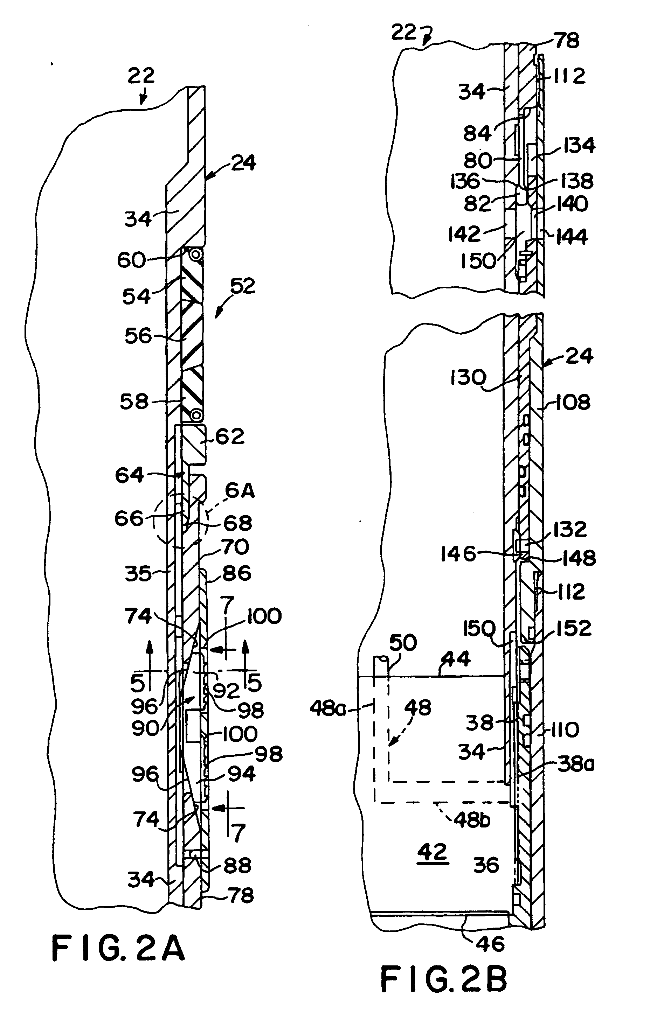

Referring now to FIGS. 2A - 2E, which cross-sectionally illustrate the hydraulically settable packer structure 22 in its initial run-in orientation, the packer body assembly 24 includes upper and lower main tubular body portions 34,36 which are threaded together as at 38 (see FIG. 2B), with a lower end section of the lower main body portion 36 being threaded into the upper end of the orienting nipple 26 as at 40 (see FIG. 2C). For purposes later described, and according to a feature of the present invention, a generally cylindrical block 42 of drillable material (such as aluminium) having top and bottom ends 44 and 46 is suitably anchored coaxially within the interior of the packer body assembly 24 (see FIG. 2B), at the juncture between the upper and lower main body portions 34 and 36 and seals off the portion of the packer body interior above the block 42 from the portion of the packer body interior below the block 42.

An interior passage 48 is formed in the block 42 and has an axially extending portion 48a opening outwardly through the upper block end 44, and a radially extending portion 48b communicating with the inner end of the axial portion 48a and opening outwardly through the side of the block 42. A hydraulic hose 50 is connected at a lower end to the upper end of the passage portion 48a and extends upwardly therefrom to the surface via the interior of the packer 22.

Turning now to an upper end portion of FIG. 2A, a resilient seal assembly 52, comprising upper, intermediate and lower annular elastomeric seal members 54,56 and 58, coaxially circumscribes the upper main packer body portion 34 immediately below an annular, downwardly facing exterior ledge 60 thereon and above a radially thickened upper end portion 62 of an annular setting force limiting member 64 that represents another feature of the present invention. Member 64 slidably circumscribes a collar 35 extending around the packer body portion 34 and has an annular downwardly and radially inwardly tapered bottom end portion 66 (see FIG. 6A also). Bottom end portion 66 is slidably received in a similarly tapered annular interior side surface recess 68 formed in an upper end portion of an annular upper setting wedge member 70 that circumscribes the packer body portion 34 and is axially movable relative thereto. As best illustrated in FIG. 6A, the recess 68 has an annular stop surface 72 at its lower end.

The annular lower end of the setting wedge member 70 has a generally frustroconical shape, and, according to a feature of the present invention, is provided with a circumferentially spaced series of milled flat areas 74 (see FIG. 5) used for a purpose later described. As illustrated in FIG. 5, the milled flat areas 74 are interdigitated with a circumferentially spaced series of arcuate outer side surface portions 76 of the outer side surface of the lower end of the upper setting wedge member 70. Relative to the centerline of the setting wedge member 70, these arcuate outer side surface portions 76 project radially outwardly a greater distance than the flat areas 74.

Referring now to the lower end of FIG. 2A and the upper end of FIG. 2B, an annular lower setting wedge member 78 circumscribes the upper packer body member 34 and is downwardly spaced apart from the upper setting wedge member 70. Lower setting wedge member 78 has a tapered annular upper end portion which, like the lower end portion of the wedge member 70 (see FIG. 5) has a circumferentially spaced series of milled flat areas 74 disposed on its outer side surface and interdigitated with arcuate side surface portions 76. As can be seen near the top end of FIG. 2B, a circumferentially spaced series of collet fingers 80, having transversely enlarged lower end portions 82, depend from the annular bottom end surface 84 of the lower setting wedge member 78.

An annular slip carrier member 86 (see FIG. 2A) outwardly circumscribes facing end portions of the upper and lower setting wedge members 70 and 78 and is releasably secured to the lower setting wedge member 78 by shear pins 88, only one of which is visible in FIG. 2A. A circumferentially spaced series of metal slip anchors 90 are positioned between facing end portions of the upper and lower setting wedge members 70 and 78 and captively retained between the carrier member 86 and the upper packer body member 34 for radial movement relative thereto. Each slip anchor 90 has vertically spaced apart upper and lower end portions 92,94 that have tapered inner side surfaces 96 that are engaged in a ramp-like manner by the milled flats 74 on the opposing ends of the upper and lower setting wedge members 70 and 78, and toothed outer side surfaces 98, the tooth configurations of which represent another feature of the present invention. The end portions 92 and 94 of the slip anchors 90 are movable inwardly and outwardly through openings 100 in the slip carrier member 86.

A circumferentially adjacent pair 90a,90b of the specially designed slip anchors 90 are illustrated in FIG. 7 as view from their outer sides. For purposes later described, the lengths of the parallel gripping teeth 102 formed on the outer sides 98 of the slip anchor ends 92,94 do not extend transversely to the packer centerline 104 as is the case in conventionally configured slip anchor teeth. Instead, on each slip anchor 90 the lengths of the teeth 102 on its upper and lower end portions 92 and 94 are generally helically disposed relative to the length of the packer, with the lengths of the anchor teeth 102 being angled with respect to both the packer centerline 104 and a reference plane 106.

As illustrated in FIG. 7, for each of the representatively depicted slip anchors 90a,90b the lengths of the teeth 102 on its upper end portion 92 are angled oppositely from the lengths of the teeth 102 on its lower end portion 94. For example, on the slip anchor 90a the lengths of the teeth on the upper end portion 92 slope downwardly and to the right, while the lengths of the teeth on the lower end portion 94 slope downwardly and to the left as viewed in FIG. 7. Thus, the helical tooth patterns on the upper and lower end portions 92,94 of the slip anchor 90a are of opposite "hands". Additionally, as also illustrated in FIG. 7, the tooth patterns in each circumferentially adjacent upper slip anchor end portion 92 (for example, the upper end portions 92 of the slip anchors 90a,90b) are of opposite hands, and the tooth patterns in each circumferentially adjacent lower slip anchor end portion 94 (for example, the lower end portions 94 of the slip anchors 90a,90b) are also of opposite hands.

With reference now to FIGS. 2B and 2C, the packer body assembly 24 also includes a tubular piston structure that outwardly circumscribes the upper and lower main packer body portions 34,36 and comprises upper and lower tubular portions 108,110. The upper end of the tubular piston portion 108 outwardly circumscribes and is threaded onto the lower setting wedge member 78, as at 112 (see the upper end of FIG. 2B), just above the collet fingers 80. The lower end of the upper tubular portion 108 is threaded into the upper end of the lower tubular portion 110, as at 112, just above the drillable block 42 at the lower end of FIG. 2B.

A bottom end section of the lower tubular portion 110 (see FIG. 2C) outwardly circumscribes a tubular stop collar structure 114 which, in turn, outwardly circumscribes the lower main packer body portion 36. A radially enlarged upper annular end portion 116 of the stop collar structure 114 abuts an annular, downwardly facing ledge 118 formed on the lower packer body portion 36, and a lower end portion of the stop collar structure is threaded to the body portion 36, as at 120, and is radially outwardly enlarged, as at 122. The bottom end of the lower piston structure portion 110 is releasably anchored to the stop collar structure 114 by shear pins 124, only one of which is visible in FIG. 2C. An annular, downwardly facing stop surface 126 is formed on the upper stop collar end portion 116 and faces a corresponding upwardly facing annular stop surface 128 disposed on the inner side of the lower piston structure portion 110.

Returning now to FIG. 2B, a tubular latch member 130 is coaxially and captively retained between the upper packer body portion 34 and the upper piston structure portion 108 for sliding vertical movement relative thereto. The lower end of the latch member 130 is releasably anchored to the packer body portion 34 by shear pins 132, only one of which is visible in FIG. 2B. Axial notches 134 are circumferentially spaced around the upper end of the latch member 130, and just below the notches 134 the latch member 130 bears radially inwardly against the enlarged lower end portions 82 of the collet fingers 80. This holds sloping shoulder surfaces 136 on the finger portions 82 against a correspondingly sloped downwardly facing annular shoulder surface 138 on the packer body portion 34, thereby preventing upward movement of the lower setting wedge member 78 relative to the packer body portion 34.

Immediately below the collet finger portions 82 are a circumferentially spaced series of fluid bypass ports 140 formed in the latch member 130 and aligned with circumferentially spaced fluid bypass ports 142,144 respectively formed in the upper packer body portion 34 and the upper piston structure portion 108. The annular bottom end 146 of the latch member 130 is upwardly adjacent an upwardly facing annular interior ledge surface 148 on the upper piston structure portion 108.

Referring now to the bottom end of FIG. 2B, the outer end of the drillable block interior passage portion 48b communicates with an axially extending slotted portion 38a of the thread joint 38 which, in turn communicates with a lower end portion of an annular passage 150 disposed above the thread joint 38 and between the packer body member 34 and the piston structure outer wall portions 108,110. As illustrated in FIG. 2B, with the packer 22 in its run-in orientation the passage 150 is blocked above the upper end of the lower packer body portion 36 by the lower ends 146,152 of the latch member 130 and the upper piston structure portion 108, respectively.

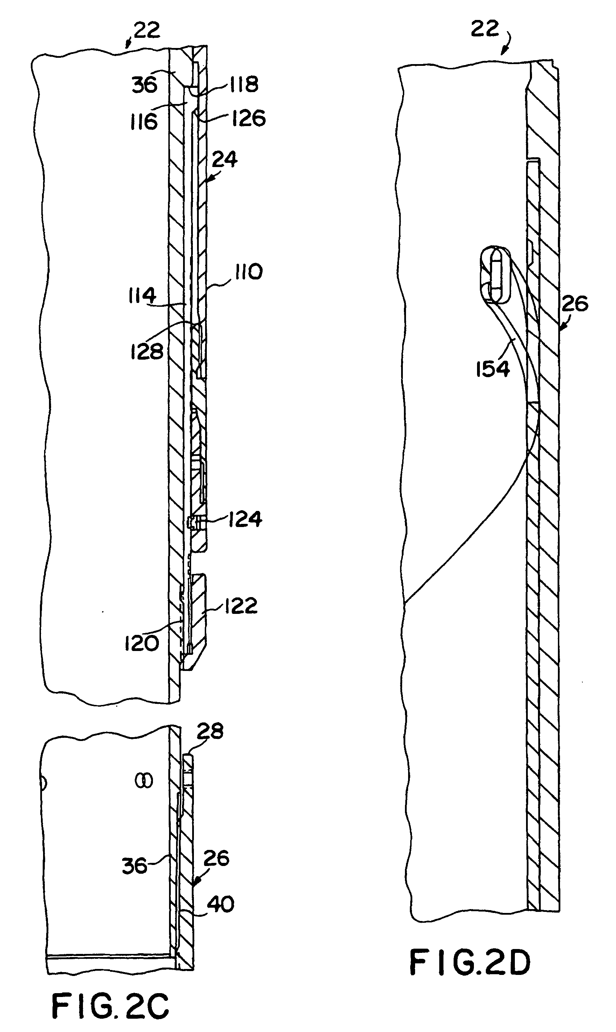

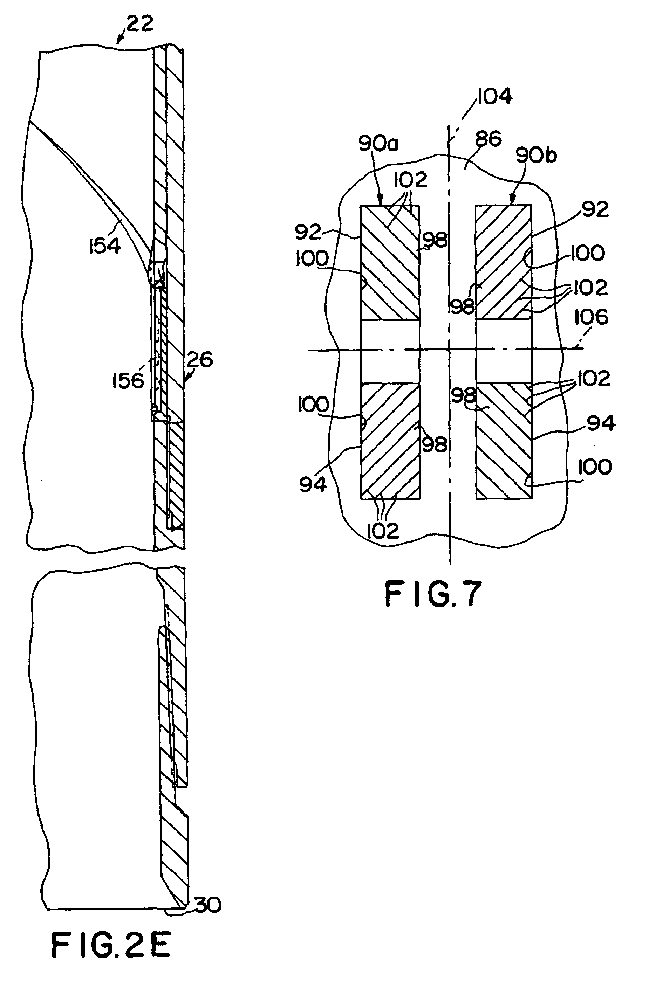

Turning now to FIGS. 2D and 2E, extending downwardly along the interior side surface of the orienting nipple 26 is a spiraled groove 154 that terminates just above a key-receiving profile 156 (see FIG. 2E) also formed in the interior nipple side surface. After the packer 22 has been operatively set in the casing 14 in a manner subsequently described, a lower end portion of a diverter device may be lowered into the nipple 26 and locked into place therein as generally described in our said European application no. filed on even date herewith and claiming priority from U.S. application serial no. 08/296941 only (17671).

Specifically, as illustrated and described in such copending application, the lower diverter device end may have a spring-loaded orienting lug that enters and rides along the groove 154 to rotationally orient the diverter device just before a locating key carried by the lower diverter device end snaps into place within the profile 156 to additionally position the diverter device in a precise predetermined vertical orientation within the casing 14.

### Operation of the Packer 22

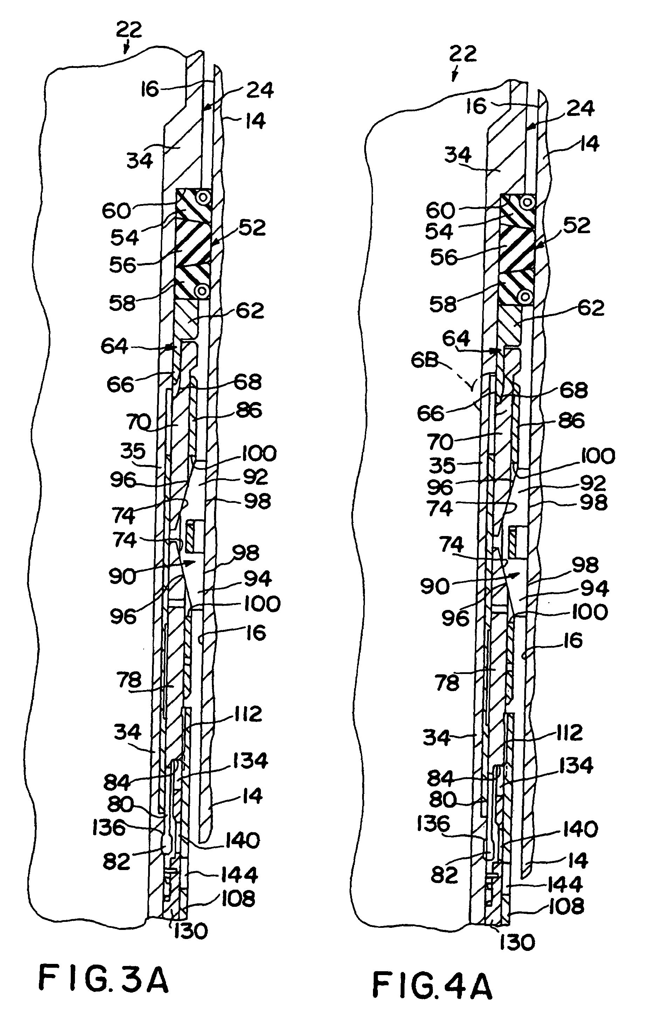

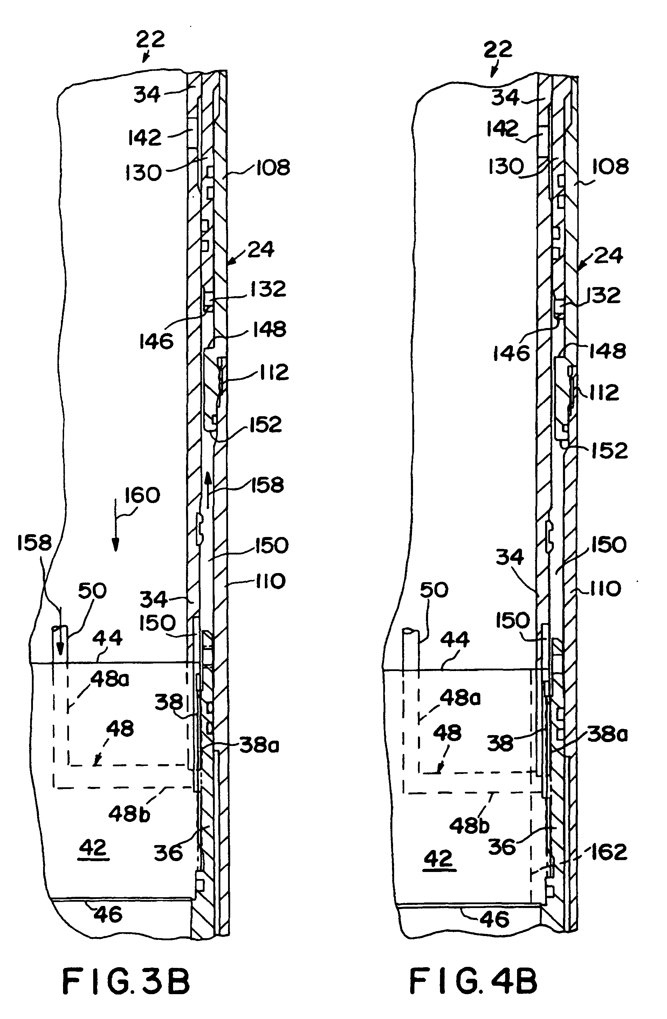

With the packer 22 in its run-in orientation just described in conjunction with FIGS. 2A-2E, the packer is lowered into the casing 14, on the lower end of the tubular anchor latch structure 32 (see FIG. 1), to a predetermined depth within the casing 14 as illustrated in FIG. 1. Referring now to FIGS. 3A-3C, the lowered packer 22 is then partially set within the casing 14 by forcing pressurized fluid 158 (see FIG. 3B) downwardly through the hydraulic hose 50. The pressurized fluid 158 enters the annular packer body chamber 150, via the drillable block passage 48 and the thread joint slot structure 38a and exerts an upwardly directed pressure force on the bottom ends 146,152 of the latch member 130 and the upper piston structure portion 108, respectively.

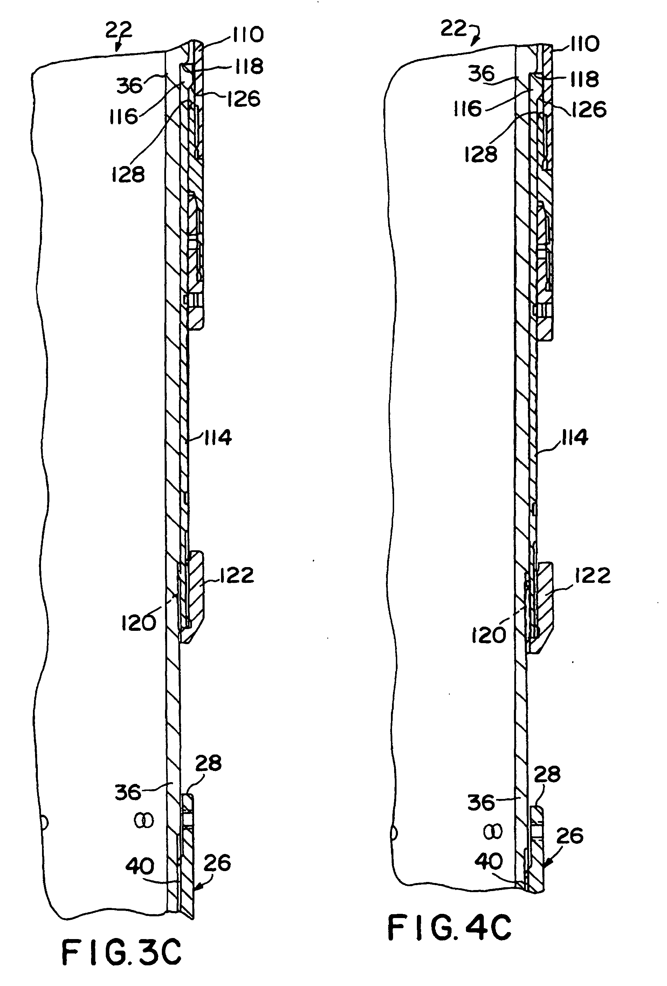

This upwardly directed fluid pressure force breaks the piston structure shear pins 124 (see FIG. 2C) and permits the threaded-together piston structure portions 108 and 110 to be hydraulically driven in an upward direction relative to the packer body portions 34,36 as may be seen by comparing FIGS. 2B and 2C to FIGS. 3B and 3C. The initial upward movement of the piston structure portions 108,110 permits the enlarged collet finger portions 82 (see FIG. 2B) to be radially outwardly deflected away from the annular shoulder surface 138 that previously blocked their upward movement, and causes the lower setting wedge member 78 to be hydraulically driven upwardly to its FIG. 3A position, thereby breaking the slip carrier shear pins 88 (see FIG. 2A).

Upwardly driven movement of the lower setting wedge member 78, in turn, causes the upper and lower setting wedge members 70,72 to radially outwardly ramp the slip anchors 90 into gripping engagement with the interior side surface 16 of the casing 14 as shown in FIG. 3A. The upwardly driven movement of the lower setting wedge member 78 also causes the upper setting wedge member 70 to be upwardly driven relative to the upper packer body portion 34 as may be seen by comparing FIG. 3A to FIG. 2A. This, in turn, drives the upper end portion 62 of the setting force limiting member 64 toward the annular ledge 60 on the upper packer body portion 34, thereby axially compressing the resilient seal assembly 52 and radially outwardly deforming it into sealing engagement with the interior side surface 16 of the casing 14. This partially sets the packer 22 within the casing 14.

Next, the setting of the packer 22 within the casing 14 is completed by forcing a second pressurized fluid 160 downwardly through the packer interior (see FIG. 3B) externally of the hydraulic hose 50. The pressure of the fluid 160 on the top side of the drillable block 42 causes the interconnected main packer body portions 34,36 to downwardly shift relative to the tubular anchor latch structure 32 (see FIG. 1), and relative to the interconnected piston structure portions 108,110 as may be seen by comparing FIGS. 3A-3C to FIGS. 4A-4C. This downward shifting of the main packer body portions 34 and 36, in turn, downwardly moves the packer body portion annular ledge 60 (see FIG. 4A) toward the upper end portion 62 of the setting force limiting member 64, thereby increasing the axial compression force on the seal structure 52 and increasing its radial sealing force against the interior side surface 16 of the casing 14.

According to a feature of the present invention, this additional axial compression of the resilient seal structure 52 (and thus the potential for overcompressing it) is limited by the setting force limiting member 64 which is downwardly driven from its FIG. 6A position toward its FIG. 6B position in which the force limiting member lower end 66 wedges against the upper setting wedge member 70 and bottoms out against the recess stop surface 72. This limited degree of axial "slip" between the setting force limiting member 64 and the interior setting wedge member side surface portion against which it wedges advantageously protects the resilient seal structure 52 from overcompression during the final packer setting procedure just described. After the setting of the packer 22 has been completed, the block 42 is suitably drilled out, as indicated by the dotted line 162 in FIG. 4B, to establish flow communication between the interior portions of the packer 22 above and below the block location.

As previously mentioned herein, a key advantage of the installed packer 22 is that, unlike conventional packers utilizing toothed slip anchor structures, it is highly resistant to rotational displacement relative to the casing 14 caused by torque imposed on the packer 22 during subsequent completion operations, such as the formation of lateral extensions of the well 10 .

This greatly enhanced resistance to rotational shifting relative to the casing 14 is uniquely provided in the present invention by (1) the previously described flat areas 74 formed on the facing annular ends of the upper and lower setting wedge members 70 and 78 (see FIG. 5), and (2) the spirally patterned gripping teeth 102 formed on the slip anchors 90 (see FIG. 7).

Relative to the flat areas 74 on the setting wedge members 70 and 78, against which the sloping inner side surfaces 96 of the slip anchors 90 bear as shown in FIG. 4A, it can be seen that an attempted rotation of the packer body relative to the outwardly ramped slip anchors 90 which grip the interior side surface 16 of the casing 14 would tend to rotate the flat areas 74 circumferentially away from their radially outwardly overlying inner side surfaces 96 of the slip anchors 90. However, any such relative rotation of the setting wedge members 70,78 relative to the anchors is very strongly resisted by the arcuate setting wedge surface areas 76 (see FIG. 5) disposed between the flat areas 74 which, as previously mentioned, project radially outwardly beyond the flat areas 74. Because of this, in order for the arcuate wedge member surface areas 76 to be rotated to underlying relationships with the slip anchor side surfaces 96 a very high pressure interference fit would have to be created between the wedge and anchor surfaces 76 and 96. This, of course, is strongly resisted by the already high radial contact forces between the slip anchors 90 and the casing 14. Accordingly, the flat setting wedge surfaces 74 and the anchor side surfaces 96 uniquely cooperate to very strongly inhibit rotation of the installed packer 22 relative to the casing 14.

This anti-rotation feature of the packer 22 is greatly augmented by the previously described gripping tooth profiles of the slip anchors 90. Due to fact that the slip anchor gripping teeth 102 (see FIG. 7) are sloped relative to both the centerline 104 and the perpendicular plane 106, they strongly resist both axial and circumferential displacement of the packer 22 relative to the casing 14.

As previously mentioned in conjunction with FIG. 7, in accordance with a preferred embodiment of the slip anchors 90, the spiral tooth pattern on the upper end portion 92 of each slip anchor is of a generally opposite hand than the spiral tooth pattern on the lower end portion 94 of the slip anchor. Additionally, the spiral tooth pattern hand on each circumferentially successive upper end portion 92 is opposite that of the circumferentially preceding upper end portion 92, and the spiral tooth pattern hand on each circumferentially successive lower end portion 94 is opposite that of the circumferentially preceding lower end portion 94.

This alternating axial and circumferential spiral tooth pattern hand reversal facilitates the rotational resistance of the packer regardless of the sense of the rotational force imposed on the installed packer relative to its centerline 104. It can be seen that if all of the anchor teeth 102 sloped in the same direction, this would still resist rotational packer movement better than conventional slip anchor teeth which are typically transverse to the packer centerline. However, with all of the teeth in the same direction, the rotational resistance would be greater in response to rotational force imposed on the packer in a first direction than in the opposite direction since, in the first direction, the teeth could at least theoretically be forced to "thread into" the casing. With the tooth profile relationships shown in FIG. 7, though, the rotational resistance of the packer 22 is at a substantially equal high level regardless of the direction of rotational force imposed on the packer about its centerline.

While the illustrated packer structure 22 is particularly well adapted for use in multilateral well formation as referred to above it will readily be appreciated by those of skill in this particular art that it can be utilized to advantage in other applications as well. Additionally, while the illustrated packer 22 has been illustrated as being of a hydraulically settable configuration, it will be readily appreciated by those of skill in this particular art that various of its unique structural and operational features may be advantageously incorporated in mechanically settable packer structures as well.

The foregoing detailed description is to be clearly understood as being given by way of illustration and example only.

## Claims

1. A torque-resistant well packer which comprises a tubular body (34,36) coaxially positionable within a subterranean well flow conductor (14) and having an axial centreline (104); a circumferentially spaced plurality of slip anchors (90) supported on said tubular body (34,36) for radial movement relative thereto between inwardly retracted release positions and outwardly extended setting positions, each of said slip anchors (90) having an outer side surface portion (98) with parallel gripping teeth (102) formed thereon and having lengths that are sloped relative to said centreline (104) and relative to a plane (106) perpendicular to said centerline; and setting means (70,78) carried on said tubular body (34,36) and being selectively operable to forcibly drive said slip anchors (90) from said release positions thereof, to said setting positions thereof, **characterised in that** each of said slip anchor outer side surfaces (98) has upper and lower spaced apart sections, with the gripping teeth (102) on the upper and lower sections being sloped in generally opposite directions.

2. A packer according to claim 1, wherein each circumferentially adjacent pair of upper sections have gripping teeth (102) that are sloped in generally opposite directions.

3. A packer according to Claim 1 or 2, wherein said setting means (70,78) are hydraulically operable.

4. A packer according to claim 1 or 2, wherein the setting means is operative to (1) forcibly drive said slip anchors (90) from said release positions thereof to said setting positions thereof in response to axial movement of said setting means relative to said tubular body, and (2) exert a radially outwardly directed force on said slip anchors (90) in response to an attempted rotation about said centreline of said tubular body and said setting means relative to said slip anchors.

5. A packer according to Claim 1, 2, 3 or 4, wherein said slip anchors (90) have sloping radially inner side surface portions (96), and said setting means (70,78) include first and second annular wedge members slidably carried on said tubular body and having facing annular ends, said facing annular ends having radially outer side surfaces with circumferentially spaced apart slopping flat areas formed thereon and engaging said radially inner side surface portions of said slip anchors to ramp-like manners, said sloing flat areas on each of said annular ends being circumferentially interdigitated with a series of arcuate outer side surface portions projecting radially outwardly beyond the flat areas.

6. A packer according to claim 1 or 2, wherein said tubular body structure includes telescoped first (34) and second (36) tubular portions axially movable toward one another and having facing annular surfaces (60) forming with an annular outer side surface section of one of said first and second tubular portions an annular recess on said tubular body structure; and further comprising an annular resilient seal structure (52) coaxially received in said annular recess; the setting means (70,78) being operable to force one of said first (34) and second (36) tubular portions toward the other of said first and second tubular portions, through a predetermined setting distance, to thereby exert an axial setting force on said annular resilient seal structure (52) in a manner axially compressing and radially outwardly deforming it; and further comprising means for permitting one of said first and second tubular portions to be axially deformed, during axial compression of said resilient seal structure, in a manner limiting the axial setting force exertable on said resilient seal structure by said first and second tubular portions.

7. A packer according to Claim 6, wherein said one (36) of said first (34) and second (36) tubular portions includes an annular force limiting member (64) having a body portion with a radially enlarged first end portion (62) facing the other (34) of said first and second tubular portions and defining said annular surface of said one of said first and second tubular portions, and a second end portion (68), and an annular drivable member drivable by said setting means (70,78) toward the annular surface of the other (34) of said first (34) and second (36) tubular members and having a first end portion telescopingly receiving said second end portion (68) of said force limiting member body portion (64), said second end portion (68) of said force limiting member (64) being wedgingly drivable further into said drivable member in response to a predetermined axial compression force exerted on said resilient seal structure by said first and second tubular portions.

8. A packer according to claim 1 or 2, further comprising: an annular resilient seal structure (52) coaxially carried on said tubular body structure; and wherein said setting means is operative to (1) forcibly drive said slip anchors (90) from said release positions to said setting positions thereof in response to axial movement of said setting means (70,78) relative to said tubular body structure, (2) exert a radially outwardly directed force on said slip anchors in response to an attempted rotation about said centreline of said tubular body structure and said setting means relative to said slip anchors, and (3) axially compress and radially outwardly deform said resilient seal structure (52); and further comprising force limiting means (64) associated with said setting means (70,78) for limiting the axial compression force exertable on said resilient seal structure (52) created by operation of said setting means.

9. A method of installing a packer (22) in a subterranean well flow conductor (52) having an interior side surface (16), said method comprising the steps of providing a packer (22) having a tubular body (24) longitudinally extending along an axis, a spaced plurality of circumferentially spaced slip anchors (90) carried on said tubular body (24) for radial movement relative thereto between inwardly retracted and outwardly extended positions and having outer side surfaces (98) with parallel gripping teeth having lengths sloped relative to said axis and a plane transverse thereto, and setting means (70,78) carried on said tubular body; coaxially positioning said packer (22) within the well flow conductor (32) with said slip anchors (90) in their retracted positions; and setting said packer (22) within the well flow conductor (32) by forcibly moving said slip anchors (90) from their retracted positions in their extended positions to drive said gripping teeth into biting engagement with the interior said surface (16) of the well flow conductor (32), **characterised in that** each of said slip anchor outer side surfaces (98) has upper and lower spaced sections with the gripping teeth (102) on the upper and lower sections being sloped in generally opposite directions.

10. A method according to claim 9, wherein each circumferentially adjacent pair of upper sections have gripping teeth (102) that are sloped in generally opposite directions.

11. A method according to claim 10 or 11, wherein the slip anchors (90) are circumferentially spaced and captively retained on said body (24) for said radial movement relative thereto, the setting means including an axially spaced pair of annular setting wedge members (70,78) coaxially carried on said body portion and having facing end portions with annular outer side surfaces in which circumferentially spaced series of flattened areas are formed, said flattened areas facing and engaging said sloping inner side surface portions of said slip anchors (90) and being circumferentially interdigitated with a series of arctuate outer side surface portions projecting radially outwardly beyond the flat areas; the method including setting said packer (21) within the well flow conductor by axially forcing one of said setting wedge member (70,78) toward the other setting wedge member to forcibly drive said slip anchors (90) outwardly from their retracted positions to their extended positions and cause said toothed outer side portions of said slip anchors to bitingly engage the interior side surface (16) of the well flow conductor (32).

12. A method according to Claim 10 or 11, wherein the packer (22) comprises an annular resilient seal structure (52) coaxially carried exteriorly on said tubular body (24), a drillable block member (42) disposed within, anchored to, and sealing off an interior portion of said tubular body, and a hydraulic flow passage having a first portion (48) extending through said drillable block member, and a second portion extending through the interior of a side wall section of said tubular body portion and communicating with said first portion (48); the method including flowing a pressurized fluid sequentially through said first (48) and second hydraulic flow passage portions and responsively forcing said slip anchors (90) from their retracted positions to their extended positions to their extended positions to drive their toothed outer side surfaces into biting engagement with the interior side surface (16) of the well flow conductor (32), and axially compressing and radially deforming said resilient seal structure (52) outwardly into engagement with the interior side surface of the well flow conductor; flowing a pressurised fluid through the interior of said tubular body and externally into forcible engagement with said drillable block member (42) in a manner responsively causing an axial shifting of said tubular body (24) relative to said slip anchors (90) and the further axial compression of said resilient seal structure (52).

## Patentansprüche

1. Ein vorschubbeständiger Bohrlochpacker, welcher einen rohrförmigen Körper (34, 36) umfasst, welcher koaxial innerhalb eines Untergrundbohrlochflußleiters (14) positioniert werden kann und eine axiale Mittellinie (104) umfasst; eine umlaufend angeordnete Reihe von Schieberankem (90), welche von dem vorgenannten rohrförmigen Körper (34, 36) gestützt werden, für das radiale Bewegen relativ zu demselben zwischen innenseitig eingefahrenen Lösepositionen und aussenseitig ausgefahrenen Feststellpositionen, wobei ein jeder Schieberanker (90) einen äusseren Seitenflächenabschnitt (98) mit parallelen Greifzähnen (102) umfasst, welche auf demselben geformt sind und Längen umfassen, welche relativ zu der vorgenannten Mittellinie (104) abgeschrägt sind und relativ zu einer Ebene (106) senkrecht zu der vorgenannten Mittellinie verlaufen; und eine Feststellvorrichtung (70, 78), welche auf dem vorgenannten rohrförmigen Körper (34, 36) geführt wird, und welche wahlweise für das gezwungene Verdrängen der vorgenannten Schieberanker (90) aus ihren vorgenannten Lösepositionen in ihre vorgenannten Feststellpositionen betrieben werden kann, **dadurch gekennzeichnet, dass** ein jeder der äusseren Seitenflächen (98) der vorgenannten Schieberanker obere und untere, voneinander getrennt positionierte Abschnitte umfasst, wobei die Greifzähne (102) der oberen und unteren Abschnitte in sich allgemein gegenüber liegenden Richtungen abgeschrägt sind.

2. Ein Packer nach Anspruch 1, bei welchem ein jedes umlaufendes, nebeneinander liegendes Paar von oberen Abschnitten Greifzähne (102) umfasst, welche in sich allgemein gegenüber liegenden Richtungen abgeschrägt sind.

3. Ein Packer nach Anspruch 1 oder 2, bei welchem die vorgenannten Feststellvorrichtungen (70, 78) hydraulisch betätigt werden können.

4. Ein Packer nach Anspruch 1 oder 2, bei welchem die vorgenannte Feststellvorrichtung operativ (1) die vorgenannten Schieberanker (90) in Reaktion auf eine axiale Bewegung der vorgenannten Feststellvorrichtung relativ zu dem vorgenannten rohrförmigen Körper aus ihren vorgenannten Lösepositionen in die vorgenannten Feststellpositionen derselben verdrängen kann, und (2) in Reaktion auf eine versuchte Rotierung um die vorgenannte Mittellinie des vorgenannten rohrförmigen Körpers und der vorgenannten Feststellvorrichtung relativ zu den vorgenannten Schieberankern eine radial nach aussen ausgerichtete Kraft auf die Schieberanker (90) auferlegen kann.

5. Ein Packer nach Anspruch 1, 2, 3, oder 4, bei welchem die vorgenannten Schieberanker (90) abgeschrägte radiale innere Seitenflächenabschnitte (96) umfassen, und wobei die vorgenannten Feststellvorrichtungen (70, 78) erste und zweite ringförmige Keilteile umfassen, welche verschiebbar auf dem vorgenannten rohrförmigen Körper geführt werden und ringförmige Vorderenden umfassen, wobei die vorgenannten ringförmigen Vorderenden radiale äussere Seitenflächen mit umlaufend und voneinander getrennt angeordneten abgeschrägten Flachbereichen umfassen, welche auf denselben geformt sind und in die vorgenannten radialen inneren Seitenflächenabschnitte der vorgenannten Schieberanker auf eine rampenartige Art und Weise eingreifen, wobei die vorgenannten abgeschrägten Flachbereiche an jedem der vorgenannten ringförmigen Enden sich umlaufend interdigital mit einer Reihe von gekrümmten äusseren Seitenflächenabschnitten abwechseln, welche radial aussenseitig über die Flachbereiche hinweg hervorstehen.

6. Ein Packer nach Anspruch 1 oder 2, bei welchem die vorgenannte rohrförmige Körperstruktur telekopische erste (34) und zweite (36) rohrförmige Abschnitte umfasst, welche axial aufeinander zu bewegbar sind und aufeinander ausgerichtete ringförmige Oberflächen (60) umfassen, welche mit einem ringförmigen äusseren Seitenflächenabschnitt eines der ersten und zweiten rohrförmigen Abschnitte eine ringförmige Aussparung auf der vorgenannten rohrförmigen Körperstruktur formen; und welche weiter eine ringförmige widerstandsfähige Dichtungsstruktur (52) umfassen, welche koaxial in der vorgenannten ringförmigen Aussparung empfangen wird; die Feststellvorrichtung (70, 78) kann dazu betrieben werden, einen der vorgenannten ersten (34) und zweiten (36) rohrförmigen Abschnitte über einen vorbestimmten Feststellabstand hinweg in Richtung des jeweils anderen der vorgenannten ersten und zweiten rohrförmigen Abschnitte zu verdrängen, um auf diese Weise eine axiale Feststellkraft auf die vorgenannte ringförmige widerstandsfähige Dichtungsstruktur (52) auf eine axial zusammendrückende Art und Weise auszuüben und dieselbe radial aussenseitig zu verformen; und welche weiter eine Vorrichtung für das axiale Verformen einer der vorgenannten ersten oder zweiten rohrförmigen Abschnitte während des axialen Zusammendrückens der vorgenannten widerstandsfähigen Dichtungsstruktur auf eine solche Art und Weise umfasst, welche die axiale Feststellkraft beschränkt, welche von den vorgenannten ersten und zweiten rohrförmigen Abschnitten auf die vorgenannte widerstandsfähige Dichtungsstruktur ausgeübt werden kann.

7. Ein Packer nach Anspruch 6, bei welchem einer (36) der vorgenannten ersten (34) und zweiten (36) rohrförmigen Abschnitte ein ringförmiges Krafteinschränkungsteil (64) mit einem Körperabschnitt mit einem sich radial vergrössemden ersten Endabschnitt (62) umfasst, welcher auf den anderen (34) der vorgenannten ersten und zweiten rohrförmigen Abschnitte ausgerichtet ist und die vorgenannte ringförmige Oberfläche von einem der vorgenannten ersten und zweiten rohrförmigen Abschnitte definiert, und einen zweiten Endabschnitt (68), und ein ringförmiges antreibbares Teil, welches von der vorgenannten Feststellvorrichtung (70, 78) in Richtung der ringförmigen Oberfläche des anderen (34) der vorgenannten ersten (34) und zweiten (36) rohrförmigen Teile angetrieben werden kann und einen ersten Endabschnitt umfasst, welcher den vorgenannten zweiten Endabschnitt (68) des vorgenannten Krafteinschränkungsteilkörperabschnitt (64) teleskopisch empfangen kann, wobei der vorgenannte zweite Endabschnitt (68) des vorgenannten Krafteinschränkungsteils (64) in Reaktion auf eine vorbestimmte axiale Zusammendrückungskraft, welche von den vorgenannten ersten und zweiten rohrförmigen Abschnitten auf die vorgenannte widerstandsfähige Dichtungsstruktur ausgeübt wird, keilartig weiter in das antreibbare Teil eingetrieben werden kann.

8. Ein Packer nach Anspruch 1 oder 2, welcher weiter umfasst: eine ringförmige widerstandsfähige Dichtungsstruktur (52), welche koaxial auf der vorgenannten rohrförmigen Körperstruktur gerührt wird; wobei die vorgenannte Feststellvorrichtung dazu betrieben werden kann, (1) die vorgenannten Schieberanker (90) in Reaktion auf eine axiale Bewegung der vorgenannten Feststellvorrichtung (70, 78) relativ zu der vorgenannten rohrförmigen Körperstruktur aus den vorgenannten Lösepositionen in die vorgenannten Feststellpositionen derselben zu verdrängen, (2) in Reaktion auf eine versuchte Rotierung der vorgenannten rohrförmigen Körperstruktur und der vorgenannten Feststellvorrichtung relativ zu den Schieberankem um die vorgenannte Mittellinie eine radial nach aussen gerichtete Kraft auf die vorgenannten Schieberanker auszuüben, und (3) die vorgenannte widerstandsfähige Dichtungsstruktur (52) axial zusammen zu drücken und aussenseitig zu verformen; und umfasst weiter eine Krafteinschränkungsvorrichtung (64), welche mit der vorgenannten Feststellvorrichtung (70, 78) assoziiert ist, für das Einschränken der axialen Zusammendrückkraft, welche durch den Betrieb der vorgenannten Feststellkraft erzeugt und auf die vorgenannte widerstandsfähige Dichtungsstruktur (52) ausgeübt wird.

9. Eine Methode für das Installieren eines Packers (22) in einem Untergrundbohrlochflußleiter (52) mit einer inneren Seitenfläche (16), wobei die vorgenannte Methode die folgenden Stufen umfasst: das Bereitstellen eines Packers (22) mit einem rohrförmigen Körper (24), welcher sich in Längsrichtung an einer Achse entlang erstreckt, einer getrennt angeordneten Reihe von umlaufend positionierten Schieberankem (90), welche auf dem vorgenannten rohrförmigen Körper (24) geführt werden, für das radiale Bewegen relativ zu demselben zwischen innenseitig eingefahrenen und aussenseitig ausgefahrenen Positionen, und äussere Seitenflächen (98) mit parallelen Greifzähnen, welche Längen umfassen, welche relativ zu der vorgenannten Achse abgeschrägt sind und eine senkrechte Ebene zu derselben repräsentieren, und eine Feststellvorrichtung (70, 78), welche auf dem vorgenannten rohrförmigen Körper geführt wird; das koaxiale Positionieren des vorgenannten Packers (22) innerhalb des Bohrlochfließleiters (32) mit Hilfe der vorgenannten Schieberanker (90) in deren eingefahrenen Positionen; und das Feststellen der vorgenannten Packer (22) innerhalb des Bohrlochfließleiters (32) durch das gezwungene Bewegen der vorgenannten Schieberanker (90) aus deren eingefahrenen Positionen in deren ausgefahrene Positionen, für das Treiben der vorgenannten Greifzähne in einen Zahneingriff mit der inneren Seitenfläche (16) des Bohrlochfließleiters (32), **dadurch gekennzeichnet, dass** die äusseren Seitenflächen (98) eines jeden der vorgenannten Schieberanker obere und untere, getrennt angeordnete Abschnitte umfassen, wobei die Greifzähne (102) an den oberen und unteren Abschnitten in sich allgemein gegenüber liegende Richtungen abgeschrägt sind.

10. Eine Methode nach Anspruch 9, bei welcher ein jedes umlaufend nebeneinander positioniertes Paar von oberen Abschnitten Greifzähne (102) umfasst, welche in sich allgemein gegenüber liegenden Richtungen abgeschrägt sind.

11. Eine Methode nach Anspruch 10 oder 11, bei welcher die Schieberanker (90) umlaufend voneinander getrennt angeordnet und unverlierbar auf dem vorgenannten Körper (24) gehalten werden, für die vorgenannte radiale relative Bewegung zu demselben, wobei die Feststellvorrichtung ein axial getrennt angeordnetes Paar von ringförmigen Feststellkeilteilen (70, 78) umfasst, welche koaxial auf dem vorgenannten Körperabschnitt geführt werden und Vorderendabschnitte mit ringförmigen äusseren Seitenflächen umfassen, auf welchen die umlaufend angeordneten Reihen von Flachbereichen geformt sind, wobei die vorgenannten Flachbereiche auf die vorgenannten abgeschrägten inneren Seitenflächenabschnitte der vorgenannten Schieberanker (90) ausgerichtet sind und in dieselben eingreifen, und sich umlaufend interdigitiert mit einer Reihe von gekrümmten äusseren Seitenflächenabschnitten abwechseln, welche radial aussenseitig über die Flachbereiche hinweg hervorstehen; die Methode umfasst das Feststellen des vorgenannten Packers (21) innerhalb des Bohrlochflußleiters durch das axiale Verdrängen eines der vorgenannten Feststellkeilteile (70, 78) in Richtung des anderen Feststellkeilteils, für das gezwungene Treiben der vorgenannten Schieberanker (90) aus ihren eingefahrenen Positionen nach aussen in ihre ausgefahrenen Positionen, und das Bewegen der vorgenannten äusseren gezahnten Seitenabschnitte der vorgenannten Schieberanker in einen Zahneingriff mit der inneren Seitenfläche (16) des Bohrlochflußleiters (32).

12. Eine Methode nach Anspruch 10 oder 11, bei welcher der Packer (22) eine rohrförmige widerstandsfähige Dichtungsstruktur (52) umfasst, welche koaxial aussenseitig auf dem vorgenannten rohrförmigen Körper (24) geführt wird, und ein herausbohrbares Blockteil (42), welches darin positioniert und damit verankert ist, und welches einen Innenabschnitt des vorgenannten rohrförmigen Körpers abdichtet, und einen hydraulischen Fließdurchgang mit einem ersten Abschnitt (48), welcher sich durch das vorgenannte herausbohrbare Blockteil erstreckt, und einen zweiten Abschnitt, welcher sich durch den Innenraum eines Seitenwandabschnitts des vorgenannten rohrförmigen Körperabschnitts erstreckt und mit dem vorgenannten ersten Abschnitt (48) in Verbindung steht; die Methode umfasst das sequenzartige Fliessen einer unter Druck stehenden Flüssigkeit durch die vorgenannten ersten (48) und zweiten hydraulischen Fließdurchgangsabschnitte, und das Verdrängen der vorgenannten Schieberanker (90) aus ihren eingefahrenen Positionen in ihre ausgefahrenen Positionen in Reaktion auf dasselbe, für das Treiben der gezahnten äusseren Seitenflächen derselben in einen Zahneingriff mit den inneren Seitenflächen (16) des Bohrlochfließleiters (32), und das axiale Zusammendrücken und das radiale Verformen der vorgenannten widerstandsfähigen Dichtungsstruktur (52) nach aussen und in einen Eingriff mit der inneren Seitenfläche des Bohrlochfließleiters; das Fliessen einer unter Druck stehenden Flüssigkeit durch den Innenraum des vorgenannten rohrförmigen Körpers, und das äussere gezwungene Eingreifen in ein herausbohrbares Blockteil (42) auf eine Art und Weise, welche in Reaktion eine axiale Umlagerung des vorgenannten rohrförmigen Körpers (24) relativ zu den vorgenannten Schieberankem (90) und ein weiteres axiales Zusammendrücken der vorgenannten widerstandsfähigen Dichtungsstruktur (52) verursacht.

## Revendications

1. Garniture de puits résistante à la torsion comprenant un corps tubulaire (34, 36) que l'on disposer coaxialement dans une tube guide d'écoulement souterrain (14) et ayant une ligne médiane axiale (104) ; une pluralité espacée de manière circonférentielle d'ancrages coulissants (90) supportés sur ledit corps tubulaire (34, 36) pour permettre un mouvement radial par rapport à celui-ci entre des positions de libération rétractées vers l'intérieur et des positions d'orientation déployées vers l'extérieur, chacun desdits ancrages coulissants (90) ayant une partie superficielle latérale externe (98) avec des dents d'accrochage parallèles (102) formées sur celle-ci et dont les longueurs sont pentues par rapport à ladite ligné médiane (104) et par rapport à un plan (106) perpendiculaire à ladite ligne médiane ; et des moyens d'orientation (70, 78) supportés sur ledit corps tubulaire (34, 36) et pouvant être sollicités de manière sélective pour entraîner de force lesdits ancrages coulissants (90) de leurs positions de libération vers leurs positions déployées, garniture **caractérisée en ce que** chacune desdites surfaces latérales externes (98) des ancrages coulissants possèdes des parties espacées supérieures et inférieures, avec les dents d'accrochage (102) sur les parties supérieures et inférieures étant pentues dans des directions généralement opposées.

2. Garniture selon la revendication 1, dans laquelle chaque paire adjacente de manière circonférentielle de parties supérieures a des dents d'accrochage (102) qui sont pentues dans des directions généralement opposées.

3. Garniture selon la revendication 1 ou 2, dans laquelle lesdits moyens d'orientation (70, 78) sont à commande hydraulique.

4. Garniture selon la revendication 1 ou 2, dans laquelle les moyens d'orientation sont opérationnels pour (1) entraîner de force lesdits ancrages coulissants (90) desdites positions de libération de ceux-ci, vers lesdites positions d'orientation de ceux-ci, en réaction au mouvement axial desdits moyens d'orientation par rapport audit corps tubulaire, et (2) appliquer une force dirigée radialement vers l'extérieur sur lesdits ancrages coulissants (90) en réaction à une tentative de rotation autour de ladite ligne médiane dudit corps tubulaire et desdits moyens d'orientation par rapport auxdits ancrages coulissants.

5. Garniture selon la revendication 1, 2, 3 ou 4 dans laquelle lesdits ancrages coulissants (90) possèdent des parties superficielles latérales internes pentues radialement (96) et lesdits moyens d'orientation (70, 78) comprennent des premier et second organes de calage annulaires supportés de manière coulissante sur ledit corps tubulaire et ayant des extrémités annulaires opposées, lesdites extrémités annulaires opposées ayant des surfaces latérales externes radialement avec des méplats pentus, espacés de manière circonférentielle, formés sur celles-ci et s'engageant dans lesdites parties superficielles latérales internes radialement desdits ancrages coulissants de façon progressive, lesdits méplats pentus sur chacune desdites extrémités annulaires étant entrelacées de manière circonférentielle avec une sérié de parties superficielles latérales externes arquées faisant saillie radialement vers l'extérieur au-delà des méplats.

6. Garniture selon la revendication 1 ou 2, dans laquelle ladite structure à corps tubulaire comprend la structure de corps tubulaire comporte une première partie tubulaire (34) et une seconde partie tubulaire (36) télescopiques, mobiles axialement l'une vers l'autre et possédant des surfaces annulaires opposées (60), formant avec une section superficielle latérale externe annulaire de l'une desdites première partie et seconde partie tubulaires, un retrait annulaire sur ladite structure à corps tubulaire ; et comprenant une structure d'étanchéité résiliente annulaire (52) reçue coaxialement dans ledit retrait annulaire ; les moyens d'orientation (70, 78) étant opérationnels pour forcer l'une desdites première partie (34) et seconde partie (36) tubulaires vers l'autre desdites première partie et seconde partie tubulaires, sur une distance d'orientation prédéterminée, pour ainsi exercer une force d'orientation axiale sur ladite structure d'étanchéité résiliente annulaire (52) de manière à la comprimer axialement et à la déformer radialement vers l'extérieur ; et comprenant de plus des moyens permettant la déformation axiale de l'une desdites première partie et seconde partie tubulaires, pendant le compression axiale de ladite structure d'étanchéité résiliente, de façon à limiter la force d'orientation axiale que lesdites première partie et seconde partie tubulaires peuvent exercer sur ladite structure d'étanchéité résiliente.

7. Garniture selon la revendication 6, dans laquelle l'une desdites première partie (34) et seconde partie (36) tubulaires contient un organe limiteur de force annulaire (64) ayant une partie corps avec une première partie extrême agrandie radialement (62) opposée à l'autre (34) desdites première partie et seconde partie tubulaires, et une seconde partie extrême (68), et un organe mobile annulaire susceptible d'être entraîné par lesdits moyens d'orientation (70, 78) vers la surface annulaire de l'autre (34) desdits premier organe (34) et second organe (36) tubulaires et possédant une première partie extrême recevant de manière télescopique ladite seconde partie extrême (68) de ladite partie corps d'organe limiteur de force (64), ladite seconde partie extrême (68) dudit organe limiteur de force (64) pouvant être en outre sollicité pour se caler dans ledit organe mobile en réaction à une force de compression axiale prédéterminée appliquée sur ladite structure d'étanchéité résiliente par lesdites première partie et seconde partie tubulaires.

8. Garniture selon la revendication 1 ou 2, comprenant en outre : une structure d'étanchéité résiliente annulaire (52) supportée coaxialement sur ladite structure de corps tubulaire ; et dans laquelle lesdits moyens d'orientation sont opérationnels pour (1) entraîner de force lesdits ancrages coulissants (90) desdites positions de libération vers lesdites positions d'orientation de ceux-ci, en réaction au mouvement axial desdits moyens d'orientation (70, 78) par rapport à ladite structure de corps tubulaire, (2) appliquer une force dirigée radialement vers l'extérieur sur lesdits ancrages coulissants en réaction à une tentative de rotation autour de ladite ligne médiane de ladite structure de corps tubulaire et desdits moyens d'orientation par rapport auxdits ancrages coulissants, et (3) pour comprimer axialement et déformer radialement vers l'extérieur ladite structure d'étanchéité résiliente (52) ; et comprenant en outre des moyens limiteurs de force (64) associés auxdits moyens d'orientation (70, 78) pour limiter la force de compression axiale susceptible de s'appliquer sur ladite structure d'étanchéité résiliente (52), force créée par l'exploitation desdits moyens d'orientation..

9. Procédé d'installation d'une garniture (22) dans un tube guide d'écoulement de puits souterrain (52) possédant une surface latérale interne (16), ledit procédé comprenant les phases de fourniture d'une garniture (22) ayant un corps tubulaire (24) s'étendant longitudinalement le long d'un axe, une pluralité espacée d'ancrages coulissants espacés de manière circonférentielle (90) supportés sur ledit corps tubulaire (24) pour assurer un mouvement radial par rapport à celui-ci, entre des positions rétractées vers l'intérieur et déployées vers l'extérieur, et possédant des surfaces latérales externes (98) avec des dents d'accrochage parallèles ayant des longueurs pentues par rapport audit axe et un plan transversal par rapport à celui-ci ; et des moyens d'orientation (70, 78) supportés sur ledit corps tubulaire ; positionnement coaxial de ladite garniture (22) à l'intérieur du tube guide d'écoulement de puits (32) avec lesdits ancrages coulissants (90) dans leurs positions rétractées ; et orientation de ladite garniture (22) à l'intérieur du tube guide d'écoulement de puits (32) en déplaçant de force lesdits ancrages coulissants (90) de leurs positions rétractées vers leurs positions déployées pour entraîner lesdites dents d'accrochage pour qu'elles mordent dans l'intérieur de ladite surface (16) du tube guide d'écoulement de puits (32), procédé **caractérisé en ce que** chacune desdites surfaces latérales des ancrages coulissants (98) possède des parties espacées supérieur et inférieure avec les dents d'accrochage (102) sur les parties supérieure et inférieure, pentues dans des directions généralement opposées.

10. Procédé selon la revendication 9, dans lequel chaque paire adjacente de manière circonférentielle de parties supérieures a des dents d'accrochage (102) pentues dans directions généralement opposées.

11. Procédé selon la revendication 9 ou 10, dans lequel les ancrages coulissants (90) sont espacés de manière circonférentielle et retenus de manière imperdable sur ledit corps (24) pour assurer ledit mouvement radial par rapport à celui-ci, les moyens d'orientation englobant une paire espacée axialement d'organes de calage d'orientation annulaires (70, 78), supportés coaxialement sur ladite partie de corps et possédant des parties extrêmes opposées avec des surfaces latérales externes annulaires dans lesquelles sont formées des séries de méplats, espacés de manière circonférentielle, lesdits méplats étant opposés et s'engageant dans lesdites parties superficielles latérales internes pentues desdits ancrages coulissants (90) et entrelacés de manière circonférentielle avec une série de parties superficielles latérales externes arquées faisant saillie radialement vers l'extérieur au-delà des méplats ; le procédé comportant l'orientation de ladite garniture (21) à l'intérieur du tube guide d'écoulement de puits en rapprochant axialement l'un desdits organes de calage d'orientation (70, 78) vers l'autre organe de calage d'orientation pour écarter lesdits ancrages coulissants (90) vers l'extérieur, de leurs positions rétractées vers leurs positions déployées, et conduire lesdites parties latérales externes dentées desdits ancrages coulissants à mordre dans la surface latérale interne (16) du tube guide d'écoulement de puits (32).

12. Procédé selon la revendication 10 ou 11, dans lequel la garniture (22) comprend une structure d'étanchéité résiliente annulaire (52) supportée coaxialement à l'extérieur sur ledit corps tubulaire (24), un organe de bloc forable (42) disposé dans, ancré à, et scellant, une partie intérieure dudit corps tubulaire, et un passage d'écoulement hydraulique ayant une première partie (48) s'étendant à travers ledit organe de bloc forable, et une seconde partie s'étendant à travers l'intérieur d'une partie de paroi latérale de ladite partie de corps tubulaire et communiquant avec ladite première partie (48) ; le procédé prévoyant l'écoulement d'un fluide sous pression de manière séquentielle à travers ladite première partie (48) et seconde partie de passage d'écoulement hydraulique et forçant, en réaction, lesdits ancrages coulissants (90) à quitter leurs positions rétractées vers leurs positions étendues, pour amener leurs surfaces latérales externes dentées à s'engager dans la surface latérale interne (16) du tube guide d'écoulement de puits (32), et compression axiale et déformation radiale de ladite structure d'étanchéité résiliente (52) vers l'extérieur pour s'engager dans la surface latérale interne du tube guide d'écoulement de puits ; écoulement d'un fluide sous pression à travers l'intérieur dudit corps tubulaire et à l'extérieur pour s'engager de force dans ledit organe de bloc forable (42) de manière à provoquer en réaction un décalage axial dudit corps tubulaire (24) par rapport auxdits ancrages coulissants (90) et la poursuite de la compression axiale de ladite structure d'étanchéité résiliente (52).
